# EUROPEAN PATENT APPLICATION

(11) **EP 4 703 121 A1**
(43) Date of publication of application: **04.03.2026**
(21) Application number: 25194209.0
(22) Date of filing: 05.08.2025
(51) Int. Cl.: B29C 45/26, B29C 45/40

(54) **MOLD EXTRACTION TABLE**

(30) Priority: 03.09.2024 IT 202400019612
(71) Applicant: Mengoni, Michele, 62019 Recanati Macerata (IT)
(72) Inventor: Mengoni, Michele, 62019 Recanati Macerata (IT)
(74) Representative: Cacciamani, Clizia

(57) **Abstract**

The present invention relates to a device for extracting a machined part from an injection mold, comprising:
- at least a first rack and a second rack attached to a first stationary part of the injection mold and synchronized with one another;
- at least a third rack and a fourth rack attached to a second stationary part of the injection mold and synchronized with one another, and synchronized with the first and second racks; and
- an extraction table positioned between the first and second stationary parts of the mold. The table comprises at least one movable element capable of sliding along the racks.

This facilitates the mechanical sliding of the movable element of the table, ensuring its flatness during the opening of an injection mold. Indeed, the synchronization between the first, second, third, and fourth racks allows the movable element of the table to rise uniformly, without imbalance.

Furthermore, thanks to the presence of the racks, the device of the present invention allows for effective opening of the injection mold without the use of additional devices, with a consequent further reduction in mold costs.

## Description

### Field of the Invention

The present invention relates to the field of injection molds. In particular, the present invention relates to a device for extracting a machined piece from an injection mold and to an injection mold including said extraction device.

### State of the Art.

The mold is a piece of equipment allowing a certain shape to be given to a piece of material to be worked; it is typically made up of two or more half-shells, delimiting a space area having the shape of the piece to be obtained. The mold is specifically designed based on the transformation process used, such as, for example, injection, die casting, drawing, foaming.

Depending on the different type of processing, the characteristics and technology of the mold change. The molds are strictly linked to the type of material for which they will be used, on whose viscosity, temperature and characteristics numerous variables depend. The mold is a piece of equipment that works only if inserted inside a machine, called the "press".

Injection molding is an industrial manufacturing process wherein a plastic material is melted and injected at high pressure into a closed mold, which is opened after the product solidification.

The injection molding cycle begins when the mold is closed, which is then followed by the material injection, typically a polymer, into the mold cavity. Once the cavity is filled, a certain pressure value is maintained to compensate for the material volumetric variations. Once the part is sufficiently cool, the mold is opened, and the molded part is ejected.

Ejection is generally achieved by the vertical movement of an ejection table, which typically comprises two movable plates screwed together, known as the upper and lower plates. The table is attached to columns that act as guides for the table itself and are secured to a bottom plate; this allows the table to freely slide without falling. The plates are used to position and move the ejectors, which act directly on the molded part, preventing them from falling. Typically, the table is held in place by two or more cylindrical columns, which in turn prevent the table from moving. Spacer elements are also present, creating a space between the lower bottom plate and the punch, which contains the half-mould of the mold. This allows the table to freely move within this space during the mold ejection phase. The ejectors push the molded part out of the half-mould.

In large molds (particularly in the automotive sector), to ensure the flatness of the extraction table during handling, hydraulic cylinders are normally used (two or four cylinders depending on the size of the extraction table) with well-balanced oil circuits.

The Applicant noted that in these situations, numerous additional processes are required, which, along with the purchase of the cylinders themselves, increase the mold cost.

Therefore, the Applicant posed the technical challenge of designing a system that would allow the extraction table to be raised uniformly, without unbalancing, and without the need for additional special devices that would consequently lead to additional costs.

### Summary of the invention

According to a first aspect, the present invention relates to a device for extracting a machined part from an injection mold indicated in claim 1.

The applicant of this application has surprisingly found that the above-mentioned technical problem can be effectively and reliably solved by a device for extracting a machined part from an injection mold, wherein said device comprises:
- a first rack and a second rack fixed to a first stationary part of said injection mould and synchronised with each other;
- a third rack and a fourth rack fixed to a second stationary part of said injection mould and synchronised with each other, and synchronised with said first rack and second rack; and
- an extraction table interposed between said first stationary part and said second stationary part of the injection mould, wherein said extraction table comprises at least one movable element capable of sliding along said first, second, third and fourth rack.

This facilitates the mechanical sliding of the movable element of the extraction table, ensuring its flatness during an injection mold opening. The synchronization between the first, second, third, and fourth racks allows the movable element of the extraction table to rise uniformly, without unbalance.

Furthermore, the presence of the racks allows the device of this invention to efficiently extract the injection mold without the use of additional devices, resulting in a further reduction in mold costs.

Finally, thanks to the presence of the racks, the movable element of the extraction table is able to slide vertically along them uniformly, without coming into direct contact with the stationary parts of the mold. This prevents any unpleasant friction between the extraction table and the stationary parts of the mold during the mold opening.

The device of the present invention further comprises:
- at least one first toothed rod provided, at a first end thereof, with a first joint element for the motion transmission placed at said first rack, and provided, at a second end thereof, opposite to said first end thereof, with a second joint element for the motion transmission placed at said second rack, wherein said first toothed rod is adapted to interact with said first and second rack so that the rotation of said first toothed rod allows the sliding of said at least one movable element of the extraction table along said first and second rack;
- at least a second toothed rod provided, at its first end, with a third joint element for the motion transmission placed at said third rack, and provided, at its second end, opposite to said first end, with a fourth joint element for the motion transmission placed at said fourth rack, wherein said second toothed rod is able to interact with said third and fourth racks so that the rotation of said second toothed rod allows the sliding of said at least one mobile element of the extraction table along said third and fourth rack; and
- a third toothed rod suitable for synchronizing said first and second toothed rod with each other and therefore suitable for synchronizing said first, second, third and fourth rack.

The presence of the interconnected toothed rods further ensures the flatness of the extraction table during the injection mold opening.

In fact, the rotation of any of the first, second or third toothed rods, each connected to the others, allows the moving element of the extraction table to rise uniformly, without imbalances.

According to a preferred embodiment, said at least one movable element of the extraction table used in the device of the present invention comprises:
- a first shoe placed at said first joint element for the motion transmission;
- a second shoe placed at said second joint element for the motion transmission;
- a third shoe placed at said third joint element for the motion transmission;
- a fourth shoe placed at said fourth joint element for the motion transmission;
wherein said first, second, third, and fourth shoes are able to slide in a synchronized manner along, respectively, said first, second, third and fourth rack following the rotation, respectively, of said first, second, third and fourth joint element for the motion transmission.

In this way, the presence of the four shoes as moving elements of the extraction table allows for a reduction in the overall dimensions of the table and, at the same time, allows for a uniform and further balanced sliding of the table during the mold opening.

According to a preferred embodiment, each of said first, second, third and fourth racks is provided with a groove along which said first, second, third and fourth shoe are able to slide, respectively.

In this way, each of these racks, in addition to facilitating the sliding of the shoes along the racks themselves, also acts as a guide for the shoes themselves. Furthermore, thanks to this guiding system, it is not necessary to use the columns typically used in standard tables for the mold opening, thus reducing the overall dimensions and providing more space in the device, while maintaining good stability and balance of the extraction table, avoiding any potential imbalances.

According to a preferred embodiment, the first, second, third, and fourth shoe are U-shaped.

Thus, thanks to the U-shape of each shoe, the two opposite longitudinal edges of the U-shape of the shoe engage with the contours of said groove, which then acts as a guide for the shoe.

According to a preferred embodiment, the connecting elements for the transmission of motion are bevel gears wheels.

In this way, the bevel gears wheels allow for better engagement and relative transmission of motion between the toothed rods, shoes, and racks.

According to a preferred embodiment, the device of the present invention further comprises a first ball bearing, a second ball bearing, a third ball bearing, and a fourth ball bearing, each positioned at a corresponding shoe of the table, specifically at a longitudinal edge of the U-shaped shoe.

In this way, the ball bearings allow for a beneficial engagement to avoid unwanted friction.

In an alternative embodiment, bushings or other similar devices may be used instead of the ball bearings.

According to a preferred embodiment, the device of the present invention further comprises a first plate, a second plate, a third plate, and a fourth plate placed, respectively, on said first, second, third, and fourth shoes.

In this way, said first, second, third, and fourth ball bearings are locked, respectively, by said first, second, third, and fourth plates on said first, second, third, and fourth shoe, thus preventing unwanted movement of the bearings.

According to a preferred embodiment, said first and second racks are parallel to each other, said third and fourth racks are parallel to each other, and each of said first, second, third, and fourth racks comprises alternating depressions and crests, and wherein the teeth of each of said first and second gear wheels are sized to cooperate with said depressions and crests of the corresponding racks.

According to a preferred embodiment, each of said first, second, third, and fourth racks is provided with a slot arranged along its longitudinal direction.

This allows the insertion of oil or lubricant into the slot formed in the rack for lubrication of the rack itself.

According to a preferred embodiment, the device of the present invention also includes a pin for each corresponding rack.

In this way, said racks are synchronized with each other.

According to a preferred embodiment, said pins are all arranged at the same height h.

In this way, the racks are calibrated thanks to the pin always positioned at the same height.

According to a preferred embodiment, the device of the present invention also includes a plurality of holes made in each of said racks, wherein each of said holes is suitable for the insertion of a corresponding pin.

In this way, each pin can be inserted into the corresponding hole to be fixed to the corresponding rack.

According to a preferred embodiment, the device of the present invention also includes a plurality of screws suitable for fixing said racks to said fixed parts of the mold.

According to a second aspect, the present invention relates to an injection mold indicated in claim 9.

The applicant of this application has surprisingly found that the above-mentioned technical problem can be effectively and reliably solved by a device for extracting a machined piece from said mold as described above with reference to the first aspect of the present invention.

Further features and advantages of the present invention will be better understood by examining the following detailed description of preferred, but not exclusive, embodiments, illustrated for illustrative and non-limiting purposes only with the aid of the attached drawings. Specifically, these drawings:
- Fig. 1 shows a complete closed view of the moving part of a mold, including a device of the present invention for extracting a machined piece from said mold;
- Fig. 2 shows an exploded view of the mold of Fig. 1;
- Fig. 3 shows the mold of Fig. 1 with the punch removed;
- Fig. 4 shows a view of Fig. 3, also illustrating a series of ejectors;
- Fig. 5 shows the mold of Fig. 3 with the second stationary part and the upper table removed to reveal some elements of the device of the present invention for extracting a machined piece from said mold;
- Fig. 6 shows the device of Fig. 5 with the lower extraction table raised to the fully extended position;
- Fig. 7 shows a detail of the device of the present invention for removing a machined piece from a mold of Fig. 5;
- Fig. 8 shows a further detail of the device of the present invention for removing a machined piece from a mold of Fig. 5;
- Fig. 9 shows the arrangement of a pin in a rack shown in the device of Fig. 8;
- Fig. 10 shows another view of a device of the present invention for removing a machined piece from a mold;
- Fig. 11 shows the device of Fig. 10 with the second fixed part removed;
- Fig. 12 shows the device of Fig. 11 with four slides visible;
- Fig. 13 shows a top view of the device of Fig. 12;
- Fig. 14 shows the device of Fig. 12 with all fixed parts removed;
- Fig. 15 shows a detail of one of the shoes in Fig. 12;
- Fig. 16 shows a further detail of the shoe in Fig. 15, showing a ball bearing and a plate; and
- Fig. 17 shows a detail of a rack in the device in Fig. 10.

### Detailed Description

The following detailed description refers to specific embodiments of the device of the present invention for extracting a machined piece from a mold, without limiting its contents.

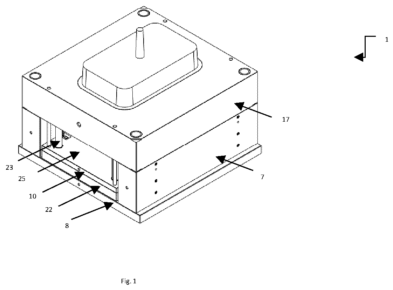

With reference to Figs. 1-17, embodiments of this device are described.

Fig. 1 shows a complete closed view of the moving part of a mold 1 containing a device of the present invention for extracting a machined piece from the mold 1. In particular, the fixed base plate 8 of the mold rests on it, upon which the movable plate 22 of the lower table rests, to which the movable plate 10 of the upper table is screwed. Also visible are the columns 23, positioned between the movable plate 22 of the lower table and the movable plate 10 of the upper table. Also visible is the empty space 25 between the fixed base plate 8 and the punch 17 containing the half-mould of the moud. In this way, the movable plate 10 of the upper table can freely move in this space 25 during the mold extraction phase.

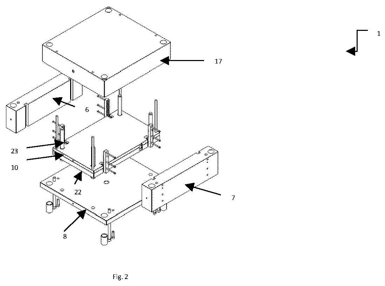

Fig. 2 shows an exploded view of the mold of Fig. 1 so as to show in greater detail a first stationary part 6 and a second stationary part 7, parallel to the first stationary part 6, which act as spacers between the fixed base plate 8 and the punch 17 and between which the table is positioned.

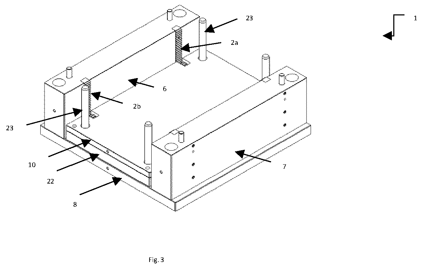

Fig. 3 shows the mold of Fig. 1 with the punch 17 removed; in this way, some elements of the device 1 of the present invention are more clearly visible, including a first rack 2a and a second rack 2b, parallel to each other, fixed to the first stationary part 6 of the extraction device 1 and designed to engage with the movable plate 10 of the upper table to allow its lifting.

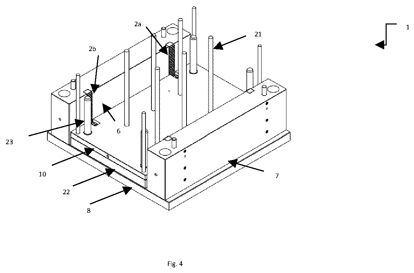

Fig. 4 shows a view of Fig. 3, also illustrating a plurality of ejectors 21 that serve to eject the machined piece from the mold 1.

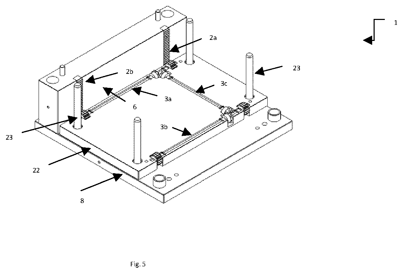

Fig. 5 shows the device of Fig. 3 with the second stationary part 7 and the movable plate 10 of the upper table removed, and also showing a first toothed rod 3a connected, at its opposite ends, to the first rack 2a and the second rack 2b, respectively. In this way, the first rack 2a and the second rack 2b are synchronized with each other. Furthermore, a second toothed rod 3b is shown, arranged along the second fixed part 7 (not visible in Fig. 5 because it was removed to show the details), parallel to the first toothed rod 3a and intended to coordinate a third rack and a fourth rack fixed to the second fixed part 7, in a similar way to the above arrangement of the first rack 2a and the second rack 2b connected to each other by means of the first toothed rod 3a (in Fig. 3 the presence of the third and fourth rack is easily understood, even if not actually shown, as the second fixed part 7 to which the third and fourth racks are fixed has been removed). A third toothed rod 3c is also shown, arranged perpendicular to the first toothed rod 3a and to the second toothed rod 2b, and suitable for synchronising the first toothed rod 3a and the second toothed rod 2b with each other.

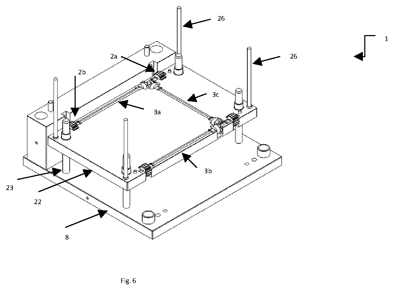

Fig. 6 shows the movable plate 22 of the lower table at its maximum extension away from the fixed base plate 8 of the mold to facilitate the extraction of the machined piece from the mold. In Fig. 6, as in Fig. 5 described above, the second fixed part 7 and the movable plate 10 of the upper table have been removed to reveal some details of the device 1 that would otherwise not be visible. The safety ejectors 26, typically present in known in the art molds (in addition to the typical ejectors 21 shown in Fig. 4), are also visible, one at each of the four corners of the movable plate 22 of the lower table.

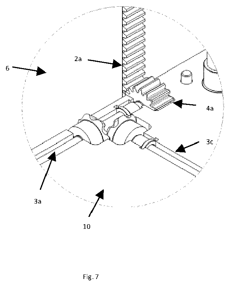

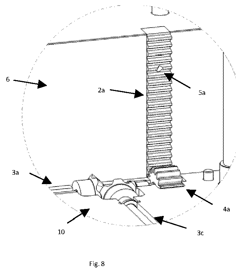

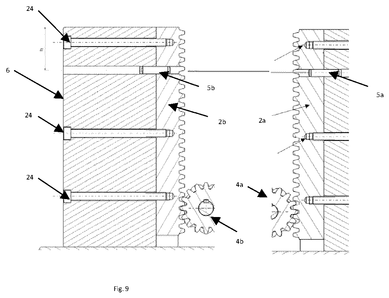

Figs. 7 and 8 show details of Figs. 5 and 6, highlighting how the third toothed rod 3c engages with the first toothed rod 3a and how the latter connects to the rack 2a via the toothed wheel 4a. Fig. 8 also shows a pin 5a inserted into the rack 2a; a pair of such pins 5a, 5b are shown in Fig. 9, inserted into the rack 2a and the rack 2b, respectively, both arranged at the same height/depth h so as to calibrate the racks 2a, 2b uniformly. Fig. 9 also shows a plurality of screws 24 designed to secure the rack 2a to the fixed part 6 of the mold.

With this embodiment, thanks to the presence of the racks 2a, 2b, 2c, 2d connected to each other, the mechanical sliding of the movable element of the extraction table is uniformly facilitated, without imbalance, to ensure its planarity during the opening of the injection mold.

Finally, thanks to the presence of the racks 2a, 2b, 2c, and 2d, the movable plate of the extraction table can slide along them, without coming into direct contact with the stationary parts 6 and 7 of the mold. This prevents any unpleasant friction between the extraction table and the stationary parts 6 and 7 of the mold during the mold opening.

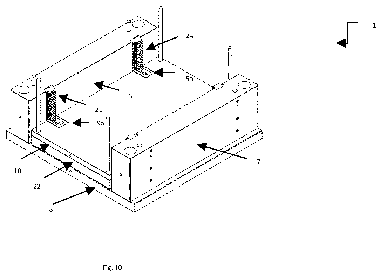

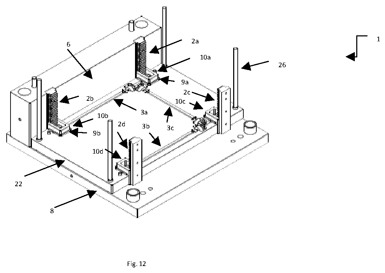

Figs. 10-17 show views wherein the upper table 10 comprises a first, second, third, and fourth shoe 10a, 10b, 10c, 10d, positioned at, respectively, with the first, second, third, and fourth racks 2a, 2b, 2c, 2d, as better shown in Figs. 12 to 14.

In particular, Fig. 10 shows a device 1 of the present invention that comprises: a) a first stationary part 6 of the injection mold to which the first rack 2a and the second rack 2b are fixed, b) a second stationary part 7 of the injection mold, parallel to the first stationary part 6, c) a movable plate 10 of the upper table for the extraction of a machined piece from the mold, interposed between the first stationary part 6 and the second stationary part 7 of the mold, and d) a fixed base plate 8 of the mold on which the movable plate 22 of the lower table rests before it is lifted. Furthermore, unlike the embodiment shown in Fig. 3, Fig. 10 also shows the guides 9a,9b positioned at, respectively, the first and second rack 2a,2b; on these guides 9a,9b, the first and second shoes 10a,10b are inserted, respectively (as shown in detail in Fig. 12).

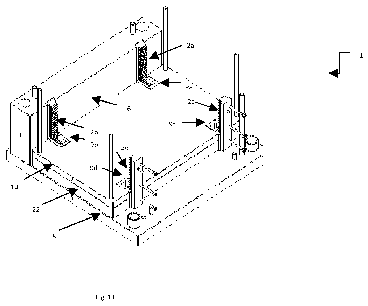

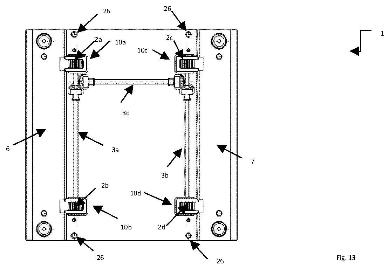

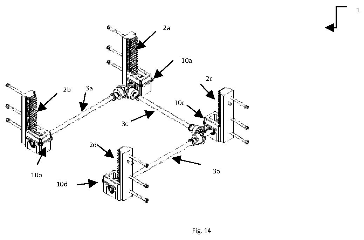

Fig. 11 shows the device of Fig. 10 with the second stationary part 7 removed; the third rack 2c and the fourth rack 2d are also shown, with their respective guides 9c, 9d on which the third and fourth shoes 10c, 10d are inserted, respectively (as shown in Figs. 13 and 14).

Fig. 12 shows the device of Fig. 11 with the movable plate 10 of the upper table also removed. Also visible in Fig. 12 are: a) the first toothed rod 3a which connects the first rack 2a and the second rack 2b, b) the second toothed rod 3b which connects the third rack 2c and the fourth rack 2d, and c) the third toothed rod 3c, which connects the first toothed rod 3a and the second toothed rod 3b. Also visible in Fig. 12 are the first and second shoes 10a, 10b fixed, respectively, to the guides 9a, 9b and the third and fourth shoes 10c, 10d.

Fig. 13 is a top view of the device in Fig. 12, clearly showing the four shoes 10a, 10b, 10c, and 10d at the four racks 2a, 2b, 2c, and 2d, connected to each other by the three toothed rods 3a, 3b, and 3c.

Fig. 14 shows the device in Fig. 12, with all fixed parts removed, exposing the four shoes 10a, 10b, 10c, and 10d at the four racks 2a, 2b, 2c, and 2d, connected to each other by the three toothed rods 3a, 3b, and 3c.

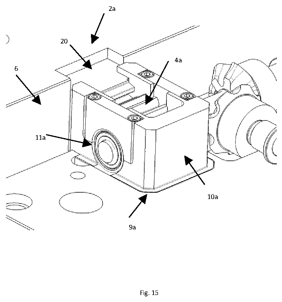

Fig. 15 shows a detail of the U-shaped shoes 10a, which is fixed to the guide 9a; the two longitudinal sides of the U of the shoe 10a are arranged around the gear wheel 4a and slide using the groove 20 obtained in the lower part of the rack 2a.

Similarly, although not shown in detail in the figures, the second, third, and fourth shoes 10b, 10c, 10d also have the same shape and are arranged in the same manner as the shoe 10a shown in detail in Fig. 15.

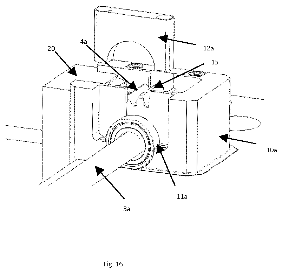

Fig. 16 shows a further detail of the U-shaped shoe 10a, which is fixed to the guide 9a; in fact, a ball bearing 11a is shown that allows the toothed rod 3a, after it has been inserted into the appropriate seat of the shoe 10a, to engage with the shoe 10a itself. Furthermore, to prevent unwanted movements, a plate 12a is present that has the function of locking the ball bearing 11a on the shoe 10a.

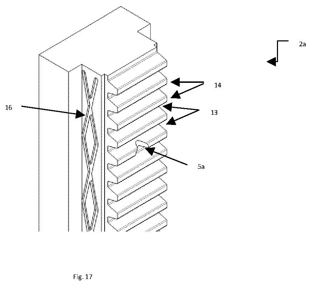

Fig. 17 shows a detail of a rack 2a of the device in Fig. 10, although the same considerations can be applied analogously to the second, third, and fourth racks 2b, 2c, 2d. Each rack features alternating depressions 13 and crests 14, so that the teeth 15 of each of said bevel gears 4a, 4b, 4c, 4c (shown in Fig. 16) can interact with the corresponding depressions 13 and crests 14 of the racks 2a, 2b, 2c, 2d.

Furthermore, each rack 2a, 2b, 2c, 2d is provided with a slot 16 into which oil or a lubricant can be inserted to lubricate the rack itself.

A seat for inserting the pin 5a is also visible in the rack 2a of Fig. 17 a.

As can be seen, in the embodiments shown with reference to Figs. 10-17, there are no columns, typically found in known in the art molds. In fact, thanks to the presence of shoes 10a, 10b, 10c, 10d in the embodiment shown with reference to Figs. 10-17, the presence of columns is no longer necessary, as their function of preventing unwanted movements during mold extraction is performed by the shoes 10a, 10b, 10c, 10d.

Therefore, with this embodiment, since the columns are not required, a cost saving and a smaller footprint on the extraction table are achieved.

Naturally, many modifications and variations of the preferred embodiments described above will be evident to those skilled in the art, while still remaining within the scope of the invention.

Therefore, the present invention is not limited to the preferred embodiments described, illustrated only for illustrative and non-limiting purposes, but is defined by the following claims.

## Claims

1. Device for extracting a machined piece from an injection mould (1), wherein said device comprises:
- a first rack (2a) and a second rack (2b) fixed to a first stationary part (6) of said injection mould (1) and synchronised with each other;
- a third rack (2c) and a fourth rack (2d) fixed to a second stationary part (7) of said injection mould (1) and synchronised with each other, and synchronised with said first rack (2a) and second rack (2b); and
- an extraction table interposed between said first stationary part (6) and said second stationary part (7) of the injection mould (1), wherein said extraction table comprises at least one movable element (10) capable of sliding along said first, second, third and fourth rack (2a,2b,2c,2d),
**characterized in that** said device further comprises:
- at least one first toothed rod (3a) provided, at a first end thereof, with a first joint element (4a) for the motion transmission placed at said first rack (2a), and provided, at a second end thereof, opposite to said first end thereof, with a second joint element (4b) for the motion transmission placed at said second rack (2b), wherein said first toothed rod (3a) is adapted to interact with said first and second rack (2a,2b) so that the rotation of said first toothed rod (3a) allows the sliding of said at least one movable element (10) of the extraction table along said first and second rack (2a,2b);
- at least a second toothed rod (3b) provided, at its first end, with a third joint element (4c) for the motion transmission placed at said third rack (2c), and provided, at its second end, opposite to said first end, with a fourth joint element (4d) for the motion transmission placed at said fourth rack (2d), wherein said second toothed rod (3b) is able to interact with said third and fourth racks (2c,2d) so that the rotation of said second toothed rod (3b) allows the sliding of said at least one mobile element (10) of the extraction table along said third and fourth rack (2c,2d); and
- a third toothed rod (3c) suitable for synchronizing said first and second toothed rod (3a,3b) with each other and therefore suitable for synchronizing said first, second, third and fourth rack (2a,2b,2c,2d).

2. Device according to claim 1, wherein said movable element (10) of the extraction table comprises:
- a first shoe (10a) placed at said first joint element (4a) for the motion transmission;
- a second shoe (10b) placed at said second joint element (4b) for the motion transmission;
- a third shoe (10c) placed at said third joint element (4c) for the motion transmission;
- a fourth shoe (10d) placed at said fourth joint element (4d) for the motion transmission;
wherein said first, second, third, and fourth shoe (10a,10b,10c,10d) are able to slide in a synchronized manner along, respectively, said first, second, third and fourth rack (2a,2b,2c,2d) following the rotation, respectively, of said first, second, third and fourth joint element (4a,4b,4c,4d) for the motion transmission.

3. Device according to claim 2, wherein each of said first, second, third and fourth racks (2a,2b,2c,2d) is provided with a groove (20) along which said first, second, third and fourth shoe (10a,10b,10c,10d) are able to slide, respectively.

4. Device according to claim 3, wherein said first, second, third, and fourth shoe (10a,10b,10c,10d) are U-shaped, and wherein the two opposite longitudinal edges of the U are adapted to engage with said groove (20).

5. A device according to any of the preceding claims, further comprising a first ball bearing (11a), a second ball bearing (11b), a third ball bearing (11c), and a fourth ball bearing (11d) located at said first, second, third, and fourth shoes (10a,10b,10c,10d).

6. Device according to claim 5, further comprising a first plate (12a), a second plate (12b), a third plate (12c), and a fourth plate (12d) positioned so as to lock said first, second, third, and fourth ball bearing (11a,11b,11c,11d) onto, respectively, said first, second, third, and fourth shoe (10a, 10b, 10c, 10d).

7. Device according to any of the preceding claims, wherein said joint elements (4a,4b,4c,4d) for the transmission of motion are bevel gear wheels (4a,4b,4c,4d).

8. Device according to any of the preceding claims, further comprising a pin (5a,5b,5c,5d) for each corresponding rack (2a,2b,2c,2d).

9. Injection mould (1) comprising a device for extracting a machined piece according to any of claims 1 to 8.
